# EUROPÄISCHE PATENTANMELDUNG

(11) **EP 1 707 650 A1**
(43) Veröffentlichungstag der Anmeldung: **04.10.2006**
(21) Anmeldenummer: 05007093.7
(22) Anmeldetag: 31.03.2005
(51) Int. Cl.: C23C 28/00, C23C 30/00, F01D 5/28

(54) **Matrix und Schichtsystem**

(71) Anmelder: SIEMENS AKTIENGESELLSCHAFT, 80333 München (DE)
(72) Erfinder: Jabado, Rene, 14199 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE); Steinbach, Jan, Dr., 13353 Berlin (DE)

(57) **Zusammenfassung**

Schutzschichten nach dem Stand der Technik erreichen ihre Schutzfunktion dadurch, dass sie an einem bestimmten Element verarmen, das eine schützende Oxidschicht bildet oder als Opfermaterial verbraucht wird. Wenn dieses Material verbraucht ist, kann die Schutzfunktion nicht mehr aufrechterhalten werden.

Erfindungsgemäß werden Pulverteilchen verwendet, die ein Depot an dem sich verbrauchenden Material enthalten, das verzögert abgegeben wird. Dies wird dadurch erreicht, dass dieses Material von einer Hülle (4) umgeben ist.

## Beschreibung

Die Erfindung betrifft eine Matrix gemäß Anspruch 1 und ein Schichtsystem gemäß Anspruch 24.

Bauteile für Hochtemperaturanwendungen, beispielsweise Turbinenschaufeln und Brennkammerwände von Gasturbinen, weisen Schutzschichten gegen Oxidation und Korrosion auf. Solche Schichten bestehen beispielsweise aus einer Legierung des Typs MCrAlX, wobei sich auf dieser MCrAlX-Schicht eine schützende Aluminiumoxid-Schicht bildet. Dabei diffundiert das Aluminium aus der MCrAlX-Legierung an die Oberfläche der MCrAlX-Schicht, sodass die Legierung an dem Element Aluminium verarmt.
Ein vorbeugend überhöhter Anteil an Aluminium in der MCrAlX-Legierung von Anfang an führt aber zu schlechteren mechanischen Eigenschaften einer MCrAlX-Schicht.

Außerdem sind Kompressorschaufeln bekannt, die mit Schutzschichten gegen Korrosion und Erosion versehen sind.
Diese weisen bei der Herstellung einen anorganischen Binder mit einem Metall auf, wobei das Metall als galvanisches Opferelement dient und daher elektrisch leitend mit dem Substrat des Bauteils verbunden ist. Eine geeignete Zusammensetzung einer solchen Schutzschicht ist aus der EP 0 142 418 B1 bekannt.
Auch hier besteht das Problem darin, dass sich das Metall mit der Zeit verbraucht, sodass die Schutzfunktion nicht mehr erfüllt wird.

Ummantelte abrasive keramische Pulverteilchen, die aus SiC (Nichtoxid-Keramik) bestehen, sind aus der US 4,741,973 bekannt.

Die EP 0 933 448 B1 offenbart Oxidteilchen in einer Schicht bestehend aus einem Aluminid.

Es ist daher Aufgabe der Erfindung, eine Matrix und ein Schichtsystem aufzuzeigen, die eine längere Schutzwirkung aufweisen.

Die Aufgabe wird gelöst durch eine Matrix gemäß Anspruch 1 und ein Schichtsystem gemäß Anspruch 24.

In den jeweiligen Unteransprüchen sind weitere vorteilhafte Maßnahmen aufgelistet, die beliebig miteinander in vorteilhafter Art und Weise miteinander kombiniert werden können.

Es zeigen
- Figur 1: ein Pulverteilchen,
- Figur 2, 3: erfindungsgemäße Schichten,
- Figur 4: eine Turbinenschaufel,
- Figur 5: eine Brennkammer und
- Figur 6: eine Gasturbine.

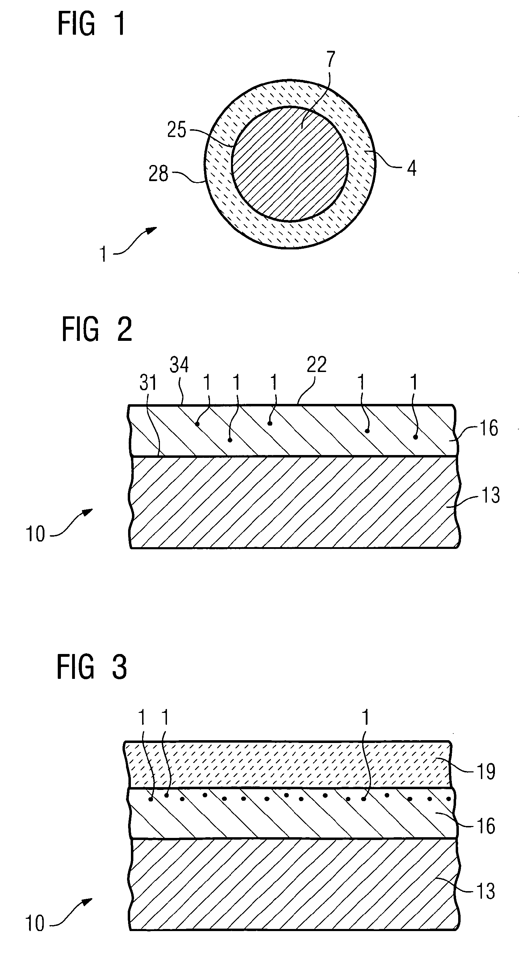

Figur 1 zeigt ein Teilchen 1 für eine erfindungsgemäße Matrix.
Das Teilchen 1 besteht aus einem Kern 7 und einer Hülle 4. Der Kern 7 besteht aus einem ersten Element oder einer ersten Verbindung. Eine Verbindung besteht aus mehreren chemischen Elementen.

Der Kern 7 kann aus einem Metall, einer organischen Verbindung (beispielsweise Keramik), einem Nichtmetalloxid, einem Metalloxid, also einem Oxid, oder einem Glas bestehen.
Der Kern 7 besteht nicht aus Siliziumkarbid (SiC) oder einer Nichtoxid-Keramik (Si₃N₄).
Ebenso kann der Kern 7 aus gesinterten Pulverteilchen oder einem Pulverkorn 7 bestehen.
Der Kern 7 ist von einer Hülle 4 umgeben, die den Kern 7 zumindest teilweise, insbesondere ganz umhüllt.
Die Hülle 4 kann auch porös ausgebildet sein.

Der Durchmesser des Kerns 7 kann im Mikro, Submikro (<1µm)-oder Nanobereich (≤ 500nm) liegen. Als Durchmesser kann auch die größte Querlänge eines Polyeders (Kern 7) verstanden werden.

Das erste Element ist insbesondere metallisch und kann beispielsweise Aluminium (A1) sein.
Ebenso kann das erste Element Chrom (Cr), eine Aluminium-Chrom-Legierung oder ein Aluminid sein. Ebenso kann der Kern 7 ein Gemisch aus zwei Metallen (beispielsweise Chrom und Aluminium) sein, die ggf. eine Legierung bilden können, aber nicht legiert sind.
Unter dem Begriff metallisch sollen auch Legierungen verstanden werden.
Weitere Beispiele für das erste Element sind Eisen (Fe), Titan (Ti) Platin (Pt), Yttrium (Y), Zink (Zn), Zinn (Sn) und/oder Kupfer (Cu).

Die Hülle 4 besteht aus einem zweiten chemischen Element oder einer zweiten Verbindung, die von dem ersten Element oder dem ersten Verbindung verschieden ist.
Die zweite Verbindung, also das Material der Hülle 4, ist insbesondere eine Keramik (Nichtoxid- oder Oxidkeramik) und ist beispielsweise Aluminiumoxid und/oder Chromoxid oder ein anderes Metalloxid wie Eisenoxid oder Titanoxid.

Ebenso kann ein organisches Material wie beispielsweise ein Si-O-C Material für die Hülle 4 verwendet werden.
Das Si-O-C Material ist insbesondere aus einem Polysiloxan-Harz hergestellt. Polysiloxan-Harze sind polymer-keramische Vorstufen der Strukturformel XSiO_{1,5}, wobei X = -CH₃, -CH, -CH₂, -C₆Hₛ etc. sein kann. Das Material wird thermisch vernetzt, wobei anorganische Bestandteile (Si-O-Si-Ketten) und organische Seitenketten überwiegend aus X nebeneinander vorliegen. Anschließend werden die Vorstufen über eine Temperaturbehandlung in Ar, N₂, Luft- oder Vakuum-Atmosphäre bei Temperaturen zwischen 600°C und 1200°C keramisiert. Dabei wird das polymere Netzwerk zersetzt und über thermische Zwischenstufen von amorphen bis kristalline Phasen neu strukturiert, wobei ausgehend von Polysiloxan-Vorstufen ein Si-O-C-Netzwerk entsteht.
Ebenso können auch von Vorstufen des Typs Polysilan (Si-Si), Polycarbosilan (Si-C), Polysilazan (Si-N) oder Polybarosilazan (Si-B-C-N) verwendet werden.

Ebenso kann das zweite Element metallisch sein und zum Beispiel aus Titan (Ti) bestehen oder eine Legierung darstellen.

Somit sind beispielsweise folgende Materialkombinationen für das Teilchen 1 möglich (Organik = organisches Material):
- Kern 7 aus SiOC -: Hülle 4 aus Metall,
- Kern 7 aus SiOC -: Hülle 4 aus Oxid (Metalloxid oder Nichtmetalloxid),
- Kern 7 aus SiOC -: Hülle 4 aus Keramik (Organik oder Si-O-C),
- Kern 7 aus SiOC -: Hülle 4 aus Glas,
- Kern 7 aus Metall -: Hülle 4 aus Metall,
- Kern 7 aus Metall-: Hülle 4 aus Oxid (Metalloxid oder Nichtmetalloxid),
- Kern 7 aus Metall -: Hülle 4 aus Keramik (Organik oder Si-O-C),
- Kern 7 aus Metall -: Hülle 4 aus Glas,
- Kern 7 aus Metall -: Hülle 4 aus Polymer,
- Kern 7 aus Oxid -: Hülle 4 aus Metall,
- Kern 7 aus Oxid -: Hülle 4 aus Oxid (Metalloxid oder Nichtmetalloxid),
- Kern 7 aus Oxid -: Hülle 4 aus Keramik (Organik oder Si-O-C),
- Kern 7 aus Oxid -: Hülle 4 aus Glas,
- Kern 7 aus Glas -: Hülle 4 aus Metall,
- Kern 7 aus Glas -: Hülle 4 aus Oxid, (Metalloxid oder Nichtmetalloxid),
- Kern 7 aus Glas -: Hülle 4 aus Keramik (Organik oder Si-O-C),
- Kern 7 aus Glas -: Hülle 4 aus Glas.

Die Hülle 4 kann beispielsweise auch einen Gradienten in der Konzentration eines ihrer Bestandteile aufweisen. So wird der Kern 7 eines Pulverteilchens 1 beispielsweise aus Aluminium gebildet und die Hülle 4 teilweise aus Platin, wobei die Konzentration des Materials der Hülle, vorzugsweise des Platins ausgehend von der Oberfläche 25 des Kerns 7 bis zur äußeren Oberfläche 28 der Hülle 4 zunimmt. Dabei nimmt also die Konzentration des Kernmaterials, also beispielsweise Aluminium in der Hülle von innen nach außen ab und hat an der Oberfläche 28 der Hülle 4 vorzugsweise dieselbe oder eine höhere Konzentration verglichen mit dem Aluminium der Matrix. Mehrschichtige Hüllen 4 sind auch denkbar.
Die Schichtdicke der Hülle 4 beträgt beispielsweise bis zu 1/5, insbesondere bis zu 1/10 des Durchmessers des Kerns 7 und ist vorzugsweise 10µm dick.

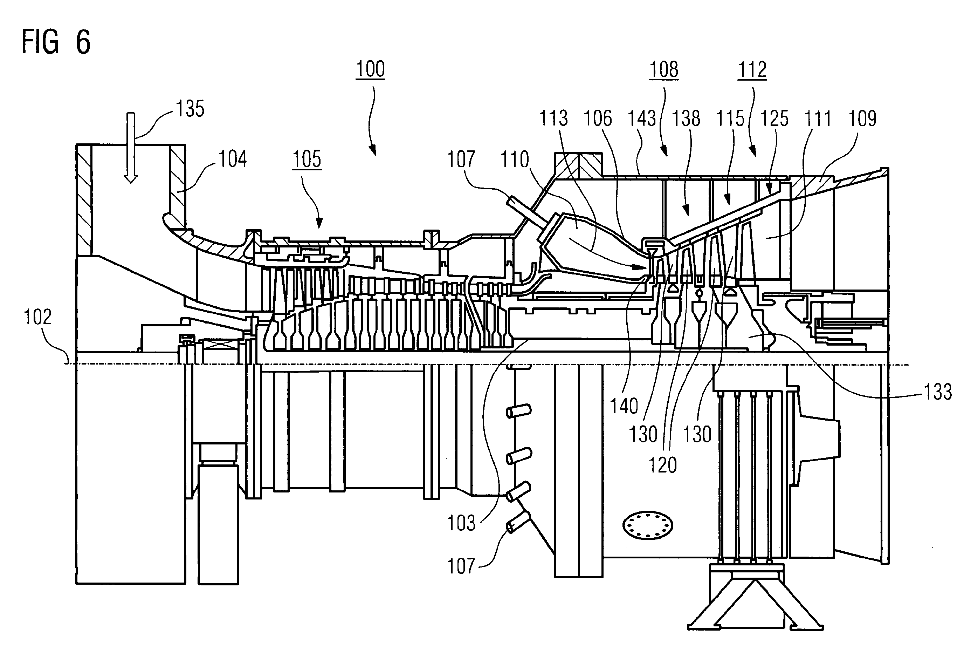

Figur 2 zeigt eine erfindungsgemäße Matrix einer Schicht 16. Die Schicht 16 ist ein Teil eines Bauteils oder Schichtsystems 10, das aus einem Substrat 13 besteht, auf dem die Schicht 16 angeordnet ist.
Das Substrat 13 ist beispielsweise ein Bauteil für hohe Temperaturen, wie zum Beispiel bei Dampf- oder Gasturbinen 100 (Fig. 6), bestehend aus einer nickel-, kobalt- oder eisenbasierten Superlegierung.
Anwendung finden solche Schichtsysteme 10 bei Turbinenschaufeln 120, 130, Hitzeschildelementen 155 oder Gehäuseteilen 138.

Die Schicht 16 weist eine Matrix aus einem Matrixmaterial auf, in der die Teilchen 1 homogen oder lokal unterschiedlich (beispielsweise mit einem Gradienten) verteilt sind.
Dabei können auch mehrere Schichten 16, 19 hergestellt und verwendet werden, wobei die Teilchen 1 in einer oder mehreren Teilschichten oder Randschichten vorhanden sind. Die Teilchen 1 können mit fast jedem Beschichtungsverfahren zusammen aufgebracht werden, also mittels thermischen Plasmaspritzens (APS, VPS, LPPS), Kaltgasspritzens, HVOF oder eines elektrolytischen Beschichtungsverfahrens.
Die Matrix der Schicht 16 kann ein Metall, eine Keramik, ein Glas oder eine keramische/organische Verbindung (beispielsweise Si-O-C) sein.
Beispielsweise ist die Schicht 16 eine Legierung des Typs MCrA1X und die Teilchen 1 bestehen aus einem Kern 7 aus Aluminium. Die Teilchen 1 können in der ganzen Schicht 16 verteilt sein oder lokal konzentriert nahe der äußeren Oberfläche 22 der Schicht 16 angeordnet sein.

Wie schon weiter oben beschrieben, ergibt sich die Schutzfunktion der MCrA1X-Legierung dadurch, dass das Aluminium Aluminiumoxid bildet, dabei allerdings in dem Matrixmaterial verarmt.
Das Aluminium des Kerns 7 weist im Material der Hülle 4 beispielsweise einen um mindestens 5%, insbesondere 10% geringeren Diffusionskoeffizienten bei Einsatztemperaturen auf als das Aluminium in der Matrix der Schicht 16, also hier in der MCrA1X-Legierung.
Bei hohen Temperaturen diffundiert das Aluminium langsam durch die Hülle 4 in die Matrix der Schicht 16 und füllt so in dem Matrixmaterial das durch die Oxidation verbrauchte Aluminium wieder auf, sodass sich die ursprüngliche Zusammensetzung der MCrAlX-Legierung kaum oder gar nicht verändert, bis sich kein Aluminium mehr in dem Pulverteilchen 1 befindet.
Damit wird erreicht, dass sich die Lebensdauer der Schutzschicht 16 erheblich verlängert.

Ebenso kann das Material der Hülle 4 so gewählt sein, dass sich die Hülle 4 durch Diffusion in der Kristallstruktur des Matrixmaterials der Schicht 16 auflöst und gegebenenfalls Ausscheidungen in dem Matrixmaterial bildet und so erst nach einer gewissen Zeit eine Diffusion des Materials des Kerns 7 direkt in die Matrix ermöglicht, da bis zu diesem Zeitpunkt die Schutzfunktion beispielsweise der MCrAlX-Schicht noch gegeben ist.
Dabei weist das zweite Element oder ein Element der zweiten Verbindung der Hülle 4 in dem Matrixmaterial beispielsweise einen höheren Diffusionskoeffizienten auf als im ersten Element oder in der ersten Verbindung.

Die Hülle 4 kann auch abrasiv und/oder thermisch und/oder chemisch aufgelöst werden, sodass der Kern 7 dadurch freigelegt wird.

Ebenso kann ein Metall, wie z.B. das Aluminium in der Schicht 16 einer Kompressorschaufel wie oben geschrieben von einer Hülle 4 beispielsweise aus Aluminiumoxid umgeben sein, wobei das Aluminiumoxid, wenn es zumindest im Bereich der Oberfläche angeordnet ist, zur Erhöhung des Erosionswiderstands beiträgt.

Ebenso kann die Schicht 16 eine Schutzschicht gegen Korrosion und/oder Erosion einer Kompressorschaufel darstellen, wobei die Teilchen 1 in einer Schicht 16 mit der chemischen Zusammensetzung gemäß des Patents EP 0 142 418 B1 dazu führen, dass über einen deutlich längeren Zeitraum genügend Opfermaterial zur Verfügung gestellt wird, damit sich die gewünschte Schutzfunktion ergibt.
Dabei ist das erste Element, insbesondere Aluminium, von einer Hülle 4 beispielsweise aus einem Binder oder Polymer umgeben.

Dabei kann ein örtlicher Konzentrationsgradient der Teilchen 1 innerhalb der Schicht 16 oder auch des Substrats 13 vorhanden sein. So nimmt beispielsweise die Konzentration der Teilchen 1 ausgehend von einer Oberfläche 31 des Substrats 13 zu einer Oberfläche 34 der Schicht 16 zu.

Beim Verdichten von Luft im Verdichter kann Wasser ausfallen, das unter Umständen in Verbindung mit anderen in der Luft enthaltenen Elementen einen Elektrolyten bildet, welches zu Korrosion und Erosion an den Verdichterschaufeln führen kann. Um die Korrosion und/oder Erosion zu verhindern, werden Verdichterschaufeln daher in der Regel mit Beschichtungen versehen. Hierbei kommen insbesondere Beschichtungen 16 in Betracht, die eine beispielsweise phosphatgebundene Grundmatrix mit darin dispersiv verteilten Metallpartikeln wie etwa Aluminiumpartikel umfassen. Die Schutzwirkung einer derartigen Beschichtung besteht darin, dass die in der Grundbeschichtung eingebetteten Metallpartikel zusammen mit dem (edleren) Metall der Verdichterschaufel und dem Elektrolyten eine galvanische Zelle bilden, in welcher die Metallpartikel sog. Opfer-Anoden bilden. Die Oxidation bzw. die Korrosion findet dann in den Opfer-Anoden statt, d.h. in den Metallpartikeln und nicht im Metall der Verdichterschaufel.

Die phosphatgebundene Grundmatrix der Beschichtung hat glaskeramische Eigenschaften, ist thermisch stabil, ebenfalls korrosionsbeständig und schützt gegen mechanische Einwirkungen, etwa Abrasion und Erosion.

Neben den Metallpartikeln kann die Beschichtung weitere Partikel als Füllstoffe enthalten. Beispielhaft seien an dieser Stelle Farbstoffpartikel genannt.

Neben phosphatgebundenen Beschichtungen kommen weitere Arten von Beschichtungen 16 in Betracht. Die EP 0 142 418 B1, die EP 0 905 279 A1 und die EP 0 995 816 A1 beschreiben Beschichtungen auf Chromat/Phosphat-Basis. Die EP 1 096 040 A2 beschreibt eine Beschichtung 16 auf Phosphat/Borat-Basis und die EP 0 933 446 B1 beschreibt eine Beschichtung auf Phosphat/Permanganat-Basis.

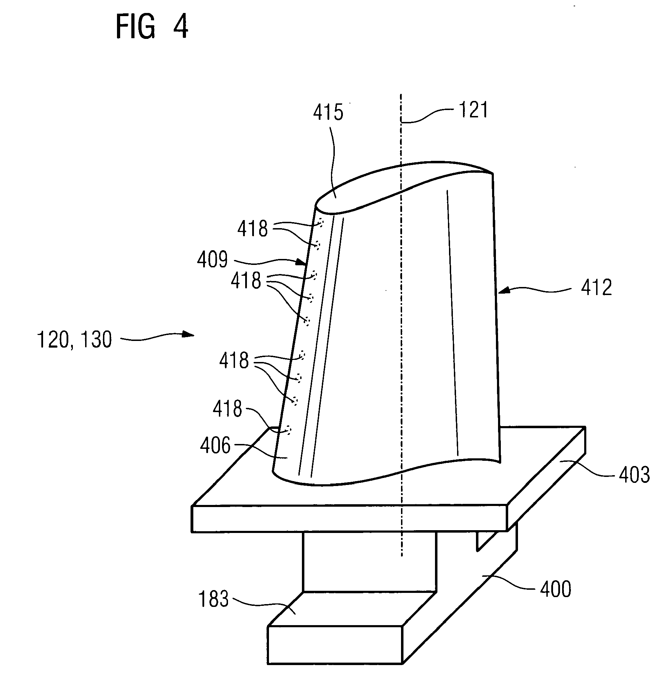

Figur 3 zeigt ein weiteres Anwendungsbeispiel der erfindungsgemäßen Schicht 16.
Das Schichtsystem 10 besteht aus einem Substrat 13, einer erfindungsgemäßen Schicht 16 mit einer weiteren Schicht 19 auf der Matrix der Schicht 16.
Dies ist beispielsweise ein Schichtsystem 10 für Hochtemperaturanwendungen, wobei das Substrat 13 wieder eine Superlegierung wie oben beschrieben darstellt und die Schicht 16 eine Matrix des Typs MCrAlX aufweist. Dann stellt die Schicht 19 eine keramische Wärmedämmschicht dar, wobei sich zwischen der Schicht 16 und der Schicht 19 die schützende Aluminiumoxid-Schicht (TGO) bildet. Die erfindungsgemäßen Teilchen 1 sind beispielsweise nahe der Grenzfläche zwischen den Schichten 16 und 19 konzentriert.

Ebenso kann man sich ein Bauteil aus einem Material vorstellen, das die Teilchen 1 aufweist, d.h. sie sind nicht in einer Beschichtung vorhanden, sondern in einem massiven Material.

Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1306454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweit genannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

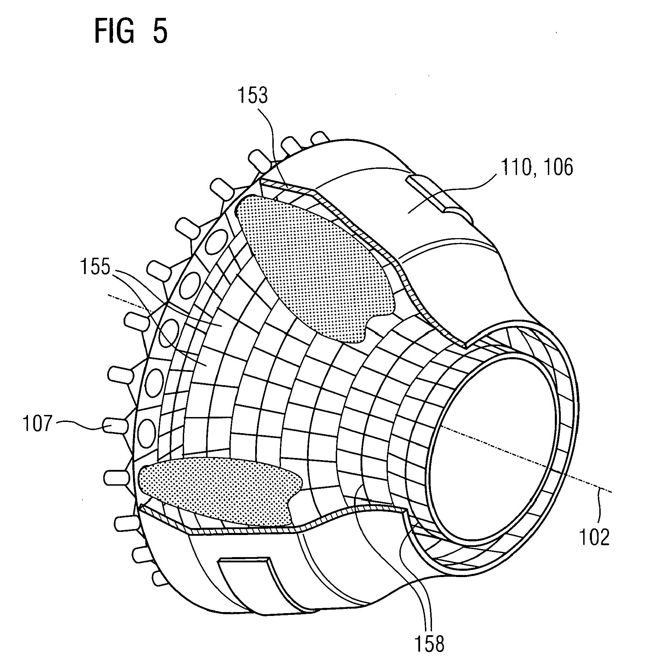

Die Figur 5 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.
Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein.
Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1204776 B1, EP 1306454, EP 1319729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Matrix
für ein Bauteil (10, 120, 130, 138, 155) oder eine Schicht (16, 19),
bestehend aus einem Matrixmaterial,
die Teilchen (1)
mit einem Kern (7),
bestehend aus einem ersten Element oder einer ersten Verbindung,
und einer Hülle (4) um den Kern (7),
bestehend aus einem zweiten Element oder zweiten Verbindung,
enthält,
**dadurch gekennzeichnet, dass**
das erste Element oder die erste Verbindung aus
einem Metall, einem Metalloxid, einem Nichtmetalloxid, einem Glas oder Si-O-C oder einer Mischung daraus besteht.

2. Matrix nach Anspruch 1,
**dadurch gekennzeichnet, dass**
das erste Element oder ein Element der ersten Verbindung im zweiten Element oder in der zweiten Verbindung einen um mindestens 5%, insbesondere mindestens 10% geringeren Diffusionskoeffizienten aufweist als das erste Element oder als ein Element der ersten Verbindung im Matrixmaterial.

3. Matrix nach Anspruch 1,
**dadurch gekennzeichnet,**
**dass** das erste Element ein Element des Matrixmaterials ist oder
**dass** die erste Verbindung dem Matrixmaterial entspricht.

4. Matrix nach Anspruch 1,
**dadurch gekennzeichnet, dass**
der Kern (7) keine Nichtoxidkeramik ist.

5. Matrix nach Anspruch 1, 2 oder 3,
**dadurch gekennzeichnet, dass**
der Kern (7) metallisch ist.

6. Matrix nach Anspruch 1, 2, 3 oder 5,
**dadurch gekennzeichnet, dass**
das erste Element Chrom ist.

7. Matrix nach Anspruch 1, 2, 3 oder 5,
**dadurch gekennzeichnet, dass**
das erste Element Aluminium ist.

8. Matrix nach Anspruch 1, 2, 3 oder 5,
**dadurch gekennzeichnet, dass**
der Kern (7) Aluminium und Chrom aufweist.

9. Matrix nach Anspruch 1, 2, 3 oder 5,
**dadurch gekennzeichnet, dass**
die erste Verbindung eine Aluminium-Chrom-, eine Nickel-Aluminium-Legierung oder ein Aluminid ist.

10. Matrix nach Anspruch 1 oder 2,
**dadurch gekennzeichnet, dass**
das zweite Element oder ein Element der zweiten Verbindung in der Kristallstruktur der Matrix lösbar ist oder
zur Ausbildung von Ausscheidungen in dem Matrixmaterial geeignet ist,
sodass sich die Hülle (4) zumindest teilweise auflösen kann.

11. Matrix nach Anspruch 1, 2 oder 10,
**dadurch gekennzeichnet, dass**
das zweite Element oder die zweite Verbindung metallisch ist.

12. Matrix nach Anspruch 1,2 oder 10,
**dadurch gekennzeichnet, dass**
die zweite Verbindung keramisch,
insbesondere ein Metalloxid ist.

13. Matrix nach Anspruch 1, 2 oder 12,
**dadurch gekennzeichnet, dass**
die zweite Verbindung Aluminiumoxid (Al₂O₃) und/oder Chromoxid (Cr₂O₃) ist.

14. Matrix nach Anspruch 1, 2, 10 oder 11,
**dadurch gekennzeichnet, dass**
das zweite Element ein Element ausgewählt aus der Gruppe Titan, Platin, Yttrium oder Rhenium ist.

15. Matrix nach Anspruch 1, 2 oder 10,
**dadurch gekennzeichnet, dass**
die zweite Verbindung eine organische Verbindung ist, insbesondere eine Si-O-C-Verbindung.

16. Matrix nach Anspruch 1,
**dadurch gekennzeichnet, dass**
die Hülle (4) porös ist.

17. Matrix nach Anspruch 1 oder 16,
**dadurch gekennzeichnet, dass**
die Hülle (4) einen Konzentrationsgradienten aufweist, insbesondere von einem Element des Materials des Kerns (7), wobei die Konzentration des Elements des Materials des Kerns (7) insbesondere von innen nach außen zur Oberfläche (28) der Hülle (4) abnimmt.

18. Matrix nach Anspruch 1,
**dadurch gekennzeichnet, dass**
der Kern (7) kornartig ausgebildet ist.

19. Matrix nach Anspruch 1,
**dadurch gekennzeichnet, dass**
das Matrixmaterial keramisch oder glaskeramisch ist.

20. Matrix nach Anspruch 1,
**dadurch gekennzeichnet, dass**
das Matrixmaterial metallisch ist.

21. Matrix nach Anspruch 1 oder 20,
**dadurch gekennzeichnet, dass**
das Matrixmaterial eine Legierung des Typs MCrAlX ist.

22. Matrix nach Anspruch 1, 17 oder 18,
**dadurch gekennzeichnet, dass**
der Durchmesser des Kerns (7) ≤ 500nm ist.

23. Matrix nach Anspruch 1, 16 oder 17,
**dadurch gekennzeichnet, dass**
die Dicke der Hülle (4) höchstens 1/5, insbesondere höchstens 1/10 des Durchmessers des Kerns (7) beträgt, insbesondere 10µm.

24. Schichtsystem,
das ein Substrat (13) und/oder
das zumindest eine Schicht (16), die auf dem Substrat (13) angeordnet ist,
mit einer Matrix gemäß einem oder mehreren der Ansprüche 1 bis 23 aufweist.

25. Schichtsystem nach Anspruch 24,
**dadurch gekennzeichnet, dass**
auf der Schicht (16) eine weitere Schicht (19) angeordnet ist.

26. Schichtsystem nach Anspruch 24,
**dadurch gekennzeichnet, dass**
innerhalb der Schicht (16) und/oder des Substrats (13) ein Gradient in der Konzentration der Teilchen (1) besteht.

27. Schichtsystem nach Anspruch 24,
**dadurch gekennzeichnet, dass**
nur das Substrat (13) eine Matrix gemäß einem oder mehreren der Ansprüche 1 bis 23 aufweist.

28. Schichtsystem nach Anspruch 24,
**dadurch gekennzeichnet, dass**
nur die Schicht (16) eine Matrix gemäß einem oder mehreren der Ansprüche 1 bis 23 aufweist.

29. Schichtsystem nach Anspruch 24, 27 oder 28,
**dadurch gekennzeichnet, dass**
das Substrat (13) eine kobalt-, nickel- oder eisenbasierte Superlegierung ist,
auf der insbesondere eine Schicht (16) mit einer Matrix aus MCrAlX aufgebracht ist,
auf der insbesondere eine keramische Wärmedämmschicht, insbesondere bestehend aus dem Material Zirkonoxid, vorhanden ist.

30. Schichtsystem nach Anspruch 24 oder 29,
**dadurch gekennzeichnet, dass**
das Schichtsystem (10) für ein Bauteil,
insbesondere für eine Turbinenschaufel (120, 130), ein Hitzeschildelement (155) oder ein Gehäuseteil (138) einer Turbine,
insbesondere einer Gas- (100) oder Dampfturbine verwendet wird.

31. Schichtsystem nach Anspruch 24,
**dadurch gekennzeichnet, dass**
das Schichtsystem (10) für eine Kompressorschaufel, insbesondere einer Gasturbine (100), verwendet wird.
